# EUROPEAN PATENT APPLICATION

(11) **EP 4 414 916 A1**
(43) Date of publication of application: **14.08.2024**
(21) Application number: 23155369.4
(22) Date of filing: 07.02.2023
(51) Int. Cl.: G06Q 10/08, G05B 19/418

(54) **METHOD AND SYSTEM ARRANGEMENT FOR OPTIMIZING PRODUCTION PLANNINGS OF PRODUCTS AND GOODS OR SHOP FLOOR LOGISTICS IN PRODUCING, TRADING OR DISTRIBUTING PRODUCTS AND GOODS**

(71) Applicant: Siemens Aktiengesellschaft, 80333 München (DE)
(72) Inventor: Wurm, Kai, 81739 München (DE); Cramer, Dieter, 81543 München (DE); Fischer, Stephan, 09221 Chemnitz (DE); Obradovic, Dragan, 85521 Ottobrunn (DE); Scholz, André, 92364 Deining (DE); Ziegler, Pascal, 90489 Nürnberg (DE); von Wichert, Georg, 80997 München (DE)
(74) Representative: Siemens Patent Attorneys

(57) **Abstract**

In order to optimize production plannings of products and goods or shop floor logistics in producing, trading or distributing products and goods - in which <A> it is addressed to maintain or keep data about <i> the production planning of the products and goods or <ii> the shop floor regarding the logistics in producing, trading or distributing the products and goods up to date, and <B> at least one mobile logistics robot (MLR1, MLR2, MLR3) to automate a logistic transport of the products, the goods or production material for the products and goods within a shop floor (SHF) is equipped each with a sensor technology (SST) appropriate to measure or capture and control a current state or changes of the shop floor by sensor data (SSD1, SSD2, SSD3), when each the robot is managed by a fleet management system (FMS) for distributing or scheduling logistic tasks (LT) among the at least one robot executing (exe) transport tasks (TT) of a transport task queue (TTO) maintained (mta) by an automated logistics planning system (ALPS) for planning the logistic transport to which the robot and the fleet management system are assigned - it is proposed to <1> store (sto) in a database (DB) shop floor master data (SHFMD), which are used to plan the shop floor logistics and loadable into the system, <2> extract (ext) from the sensor data-based measurements or captures shop floor related information (INF1_{SHF}, INF2_{SHF}, INF3_{SHF}), <3> submit (sbm) the shop floor related information by each of the at least one robot to a data fusion facility (DFF) for gathering the shop floor related information and <4> update (upd) the master data through the data fusion facility having access to the database by merging (mrg) the master data with the gathered information in a corresponding manner.

## Description

The invention refers to a method for optimizing production plannings of products and goods or shop floor logistics in producing, trading or distributing products and goods according to the preamble claim 1, a system arrangement for optimizing production plannings of products and goods or shop floor logistics in producing, trading or distributing products and goods according to the preamble claim 9.

In order to optimize either production plannings of products and goods or shop floor logistics in producing, trading or distributing products and goods it is necessary to have knowledge about the shop floors, in particular the use of production equipment, the locations of assets, the utilization of buffer areas and the information about the distribution of mobile equipment and human workers in the shop floors. Keeping track of this knowledge information is rarely automated and, especially in low-volume high-mix production, this information can change rapidly with new production tasks.

There are existing technical solutions to automatically track locations of assets in shop floors. These solutions are realized systems being usually called as "Real-Time-Locating-Systems <RTLS>". Regarding these RTL-Systems there are existing several technical implementations, e.g., using Bluetooth or ultra-wideband beacons and receivers. In these systems beacons are attached to the assets and material to be tracked. The RTL-System allows to have up-to-date information of shop floor data but comes at the price of installing significant infrastructure, e.g., the receivers and beacons. Alternatively, if no RTL-System is used, information about a production shop floor is kept up to date by predicting a state of the shop floor from a previous known state and manually checking an actual state to correct the prediction.

It is an objective of the invention to propose a method and system arrangement for optimizing production plannings of products and goods or shop floor logistics in producing, trading or distributing products and goods, in which it is addressed to maintain or keep data about (**i**) the production planning of the products and goods or (**ii**) the shop floor regarding the logistics in producing, trading or distributing the products and goods up to date.

This objective involves gathering information about (**i**) the production planning of the products and goods or (**ii**) the shop floor logistics producing, trading or distributing the products and goods inter alia regarding equipment being used, locations of assets such as tools or robots or automated machines, utilization of buffer areas as well as information about the distribution of mobile equipment and human workers regarding the production planning or in the shop floor.

The cited objective is solved with regard to a method defined in the preamble of claim 1 by the features in the characterizing part of claim 1.

Furthermore, the cited objective is solved with regard to a system arrangement defined in the preamble of claim 9 by the features in the characterizing part of claim 9.

The main idea of the invention according to the claims 1 and 9 in order to optimize production plannings of products and goods or shop floor logistics in producing, trading or distributing products and goods, in which at least one mobile logistics robot to automate a logistic transport of the products, the goods or production material for the products and goods within a shop floor is equipped each with a sensor technology including at least one sensor and a processing/control unit appropriate to measure or capture and control a current state or changes of the shop floor by sensor data, when each the robot is managed by a fleet management system for distributing or scheduling logistic tasks among the at least one mobile logistics robot executing transport tasks of a transport task queue maintained by an automated logistics planning system for planning the logistic transport to which the mobile logistics robot and the fleet management system are assigned, it is proposed - as key aspects of the idea - to
(1) store in a database of a data administration system shop floor master data of the shop floor, which are used to plan the shop floor logistics and loadable into the automated logistics planning system,
(2) extract from the sensor data-based measurements or captures shop floor related information by the processing/control unit,
(3) submit the shop floor related information by each of the at least one mobile logistics robot to a data fusion facility of the data administration system for gathering the shop floor related information and
(4) update the stored shop floor master data through the data fusion facility having access to the database by merging the stored shop floor master data with the gathered shop floor related information in a corresponding manner.

The at least one mobile logistics robot is preferably an "Automated Guided Vehicle <AGV>" or an autonomous forklift (cf. claims 7 and 15). But of course it is generally possible that the mobile logistics robot could be any other mobile automated machine.

Moreover, the sensor is advantageously a 2D- and/or 3D-camera, a 2D- and/or 3D-"Light Detection and Ranging <LIDAR>-sensor", a time-of-flight sensor, a stereo camera, a "Radio-Frequency IDentification <RFID>"-detector, a microphone for capturing noises from persons, engines and/or machine tools or any other volumetric sensor (cf. claims 8 and 16). But of course it is also generally possible that the sensor could be any other device with a different detecting technology.

The proposed solution differs from the state of the art using a dedicated RTLS-technology and described in the beginning by
- generating additional benefits with an existing mobile logistics robot fleet,
- no needs to install additional sensors on the robots because most of the used mobile logistics robots are already be equipped with appropriate sensors for their primary function of navigating the shop floor,
- enabling savings in manual efforts when the manual update of the master data of the shop floor and the shop floor related information are replaced by the automated solution as presented according to the invention when the stored shop floor master data is getting updated by merging the stored shop floor master data with the gathered shop floor related information extracted from the sensor data-based measurements or captures,
- achieving a better data quality when the database storing the master data will be updated continuously updated, e.g., the database is more accurate and less old, than the database is only updated when it is needed.

According to an advantageous development of the presented idea (cf. claims 2 and 10) the shop floor related information extracted from the robot measurements is at least one of (**i**) data about utilization a space of the shop floor, (**ii**) data about persons that are present in different areas of the shop floor and (**iii**) data about a location of assets of the shop floor.

Regarding (**i**) the data concern for example buffer zones, material delivery or storage, material input and output of production machines such as machine tools and shipping areas as well as noises from engines and machine tools. The utilization of such areas can be estimated using the 3D-camera, the 3D-"Light Detection and Ranging <LIDAR>-sensor", the time-of-flight sensor, the stereo camera, or the volumetric sensor respectively the microphone for capturing the noises.

Regarding (**ii**) the presence of the data in the different areas of the shop floor are given by areas around production machines, commissioning stations, inbound or outbound logistics areas, or packaging stations, while the number of persons in these area can be estimated by using the 2D-camera, the 3D-sensor, the 2D/3D-"Light Detection and Ranging <LIDAR>-sensor" or the microphone.

Regarding (**iii**) the location of the assets can be identified with the 2D-camera either using object recognition algorithms or machine-readable codes such as QR codes, the 3D-camera using object recognition algorithms, or the RFID-detectors for assets that are tagged with RFID-markers or the microphone for capturing noises from the engines and the machine tools.

According to a further beneficial development of the presented idea (cf. claims 3 and 11) the shop floor related information shop floor related information are submitted to the data fusion facility preferably continuously either ("Option I") via a wireless connection from the at least one mobile logistics robot to the data fusion facility including each a wireless interface or ("Option II") via a wireless connection from the at least one mobile logistics robot to the fleet management system including each a wireless interface, wherein for forwarding the shop floor related information the fleet management system is connected with the data fusion facility.

Furthermore, it is of a particular advantage according to the claims 4 and 12 when in a case where the gathered shop floor related information submitted from at least two mobile logistics robots concern indeed a same state of the shop floor but are different the data fusion facility derives the most likely state by using probabilistic state estimation techniques such as a "Bayesian filter".

In addition it is beneficial (cf. claims 5 and 13 supplemented by the claims 6 and 14) to monitor the shop floor master data by a data task scheduler assigned and having access to the database to identify a specific stored shop floor master data of the stored shop floor master data that requires an update, for example if the identified specific data has not been updated for a given time period, and to maintain a data task queue through the data task scheduler, wherein the data task queue is used by the fleet management system in a way where either the executed transport tasks of the transport task queue are prioritized with regard to whether the executed transport task also completes a data task of the data task queue or if the at least one mobile logistics robot is not occupied with one logistic task distributed or scheduled by the fleet management system the said mobile logistics robot is scheduled instead only with a data task of the data task queue.

Besides the above, advantageous further developments of the invention arise out of the following description of a preferred embodiment of the invention according to a lonely FIGURE showing a system arrangement for optimizing production plannings of products and goods or shop floor logistics in producing, trading or distributing products and goods.

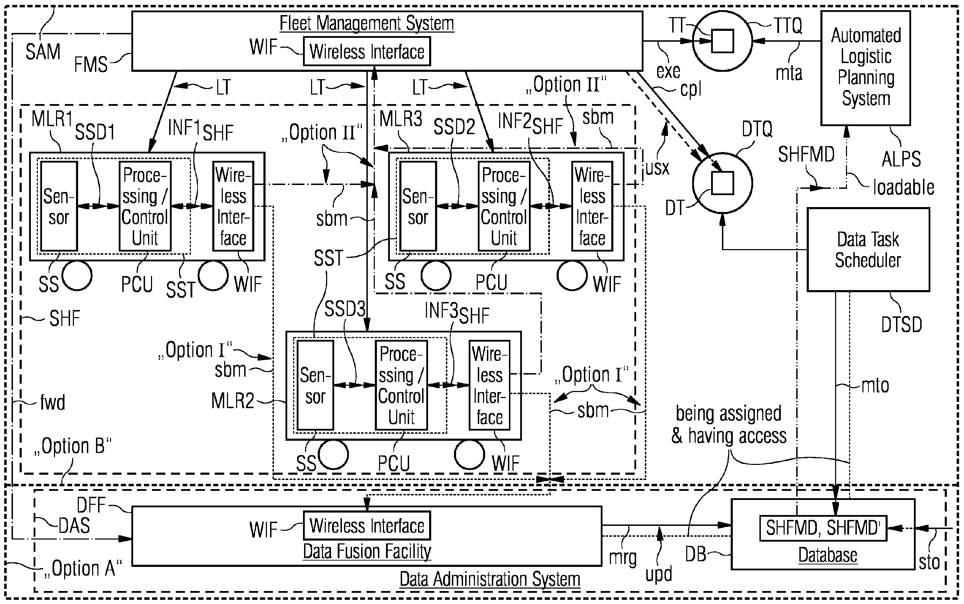

The FIGURE depicts a system arrangement SAM for optimizing production plannings of products and goods or shop floor logistics in producing, trading or distributing products and goods, wherein the system arrangement SAM includes besides an automated logistics planning system ALPS in addition a fleet management system FMS and at least one mobile logistics robot MLR1, MLR2, MLR3. Both, the fleet management system FMS and the at least one mobile logistics robot MLR1, MLR2, MLR3 are assigned to the automated logistics planning system ALPS. According to the depicted system arrangement SAM there are for example three mobile logistics robots, a first mobile logistics robot MLR1, a second mobile logistics robot MLR2 and a third mobile logistics robot MLR3, which can be operated regarding logistic transports in a shop floor SHF of the system arrangement SAM.

The mobile logistics robots MLR1, MLR2, MLR3 are preferably "Automated Guided Vehicle's <AGV>" or autonomous forklifts.

In order to automate a logistic transport of the products, the goods or production material for the products and goods within the shop floor SHF (**1**) the three mobile logistics robots MLR1, MLR2, MLR3 are equipped each with a sensor technology SST and (**2**) three mobile logistics robots MLR1, MLR2, MLR3 are managed by the fleet management system FMS for distributing or scheduling logistic tasks LT among the three mobile logistics robots MLR1, MLR2, MLR3 for executing exe transport tasks TT of a transport task queue TTQ maintained mta by the automated logistics planning system ALPS to plan the logistic transport.

The cited sensor technology SST each of the mobile logistics robots MLR1, MLR2, MLR3 is equipped with includes each at least one sensor SS and a processing/control unit PCU. Each sensor SS of the mobile logistics robots MLR1, MLR2, MLR3 is appropriate to measure or capture a current state or changes of the shop floor SHF by generating sensor data SSD1, SSD2, SSD3. So, the first mobile logistics robot MLR1 generates first sensor data SSD1, the second mobile logistics robot MLR2 generates second sensor data SSD2 and the third mobile logistics robot MLR3 generates third sensor data SSD3.

The used sensor SS of the sensor technology SST can be advantageously a 2D- and/or 3D-camera, a 2D- and/or 3D-"Light Detection and Ranging <LIDAR>-sensor", a time-of-flight sensor, a stereo camera, a "Radio-Frequency IDentification <RFID>"-detector, a microphone for capturing noises from engines and machine tools or any other volumetric sensor.

After that for processing the sensor data and controlling the current state or changes of the shop floor SHF each processing/control unit PCU of the mobile logistics robots MLR1, MLR2, MLR3 extracts ext from the sensor data-based measurements or captures shop floor related information INF1_{SHF}, INF2_{SHF}, INF3_{SHF}. So, the first mobile logistics robot MLR1 extracts from the first sensor data SSD1 first shop floor related information INF1_{SHF}, the second mobile logistics robot MLR2 extracts from the second sensor data SSD2 second shop floor related information INF2_{SHF} and the third mobile logistics robot MLR3 extracts from the third sensor data SSD3 third shop floor related information INF3_{SHF}.

The system arrangement SAM further includes according to an "Option A" a data administration system DAS or alternatively according to an "Option B" a data administration system DAS is assigned to the system arrangement SAM. In both cases the data administration system DAS includes a database DB, which stores sto shop floor master data SHFMD of the shop floor SHF. The shop floor master data SHFMD are used to plan the production of the products and goods or the shop floor logistics and thus can be loaded into the automated logistics planning system ALPS.

The data administration system DAS includes further a data fusion facility DFF, which is preferably assigned and has access to the database DB and to which the shop floor related information INF1_{SHF}, INF2_{SHF}, INF3_{SHF} are submitted sbm by the mobile logistics robots MLR1, MLR2, MLR3 for gathering the shop floor related information INF1_{SHF}, INF2_{SHF}, INF3_{SHF}.

The shop floor related information INF1_{SHF}, INF2_{SHF}, INF3_{SHF}, which is extracted ext from the robot measurements is preferably at least one of data about utilization a space of the shop floor SHF, data about persons that are present in different areas of the shop floor SHF and data about a location of assets of the shop floor SHF.

For the submission of the shop floor related information INF1_{SHF}, INF2_{SHF}, INF3_{SHF} the mobile logistics robots MLR1, MLR2, MLR3 include each a wireless interface WIF. By this wireless interfaces WIF the shop floor related information INF1_{SHF}, INF2_{SHF}, INF3_{SHF} are submitted sbm to the data fusion facility DFF, which include also for this purpose each a wireless interface WIF. The submission is done preferably continuously.

Moreover the shop floor related information INF1_{SHF}, INF2_{SHF}, INF3_{SHF} can be submitted either according to an "Option I" via wireless connections from the mobile logistics robots MLR1, MLR2, MLR3 to the data fusion facility DFF or according to an "Option II" via wireless connections from the mobile logistics robots MLR1, MLR2, MLR3 to the fleet management system FMS, which is connected with the data fusion facility DFF for forwarding fwd the shop floor related information INF1_{SHF}, INF2_{SHF}, INF3_{SHF}.

The data fusion facility DFF to which the shop floor related information INF1_{SHF}, INF2_{SHF}, INF3_{SHF} are submitted sbm by the mobile logistics robots MLR1, MLR2, MLR3 has access to the database DB and updates upd the stored shop floor master data SHFMD by merging mrg the stored shop floor master data SHFMD with the gathered shop floor related information INF1_{SHF}, INF2_{SHF}, INF3_{SHF} in a corresponding manner. Merging in a corresponding manner means that the gathered shop floor related information INF1_{SHF}, INF2_{SHF}, INF3_{SHF} is not merged arbitrarily but rather purposeful where the gathered shop floor related information INF1_{SHF}, INF2_{SHF}, INF3_{SHF} correspond to data of the stored shop floor master data SHFMD.

The data fusion facility DFF is furthermore in an advantageous manner designed such that the facility derives - in a case where the gathered shop floor related information INF1_{SHF}, INF2_{SHF}, INF3_{SHF} submitted from two mobile logistics robots, for example the first mobile logistics robot MLR1 and the second mobile logistics robot MLR2 or the second mobile logistics robot MLR2 and the third mobile logistics robot MLR3 or the first mobile logistics robot MLR1 and the third mobile logistics robot MLR3, concern indeed a same state of the shop floor SHF but are different, because the two mobile logistics robots are at different locations in the shop floor SHF - the most likely state by using probabilistic state estimation techniques such as a "Bayesian filter".

Finally, the system arrangement SAM includes a data task scheduler DTSD, which is preferably assigned and has access to the database DB of the data administration system DAS. By having this access the data task scheduler DTSD (i) monitors mto the shop floor master data SHFD in the database DB to identify a specific stored shop floor master data SHFMD' of the stored shop floor master data SHFMD that requires an update, for example if the identified specific data SHFMD' has not been updated for a given time period, and (**ii**) maintains mtg a data task queue DTQ.

This data task queue DTQ can be advantageously used usx by the fleet management system FMS in a way where either the executed transport tasks TT of the transport task queue TTQ are prioritized with regard to whether the executed transport task TT also completes cpl a data task DT of the data task queue DTQ or if at least one of the mobile logistics robots MLR1, MLR2, MLR3 is not occupied with one logistic task LT distributed or scheduled by the fleet management system FMS this at least one mobile logistics robot MLR1, MLR2, MLR3 is scheduled instead only with a data task DT of the data task queue DTQ.

## Claims

1. Method for optimizing production plannings of products and goods or shop floor logistics in producing, trading or distributing products and goods, in which at least one mobile logistics robot (MLR1, MLR2, MLR3) to automate a logistic transport of the products, the goods or production material for the products and goods within a shop floor (SHF) is equipped each with a sensor technology (SST) including at least one sensor (SS) and a processing/control unit (PCU) appropriate to measure or capture and control a current state or changes of the shop floor (SHF) by sensor data (SSD1, SSD2, SSD3), when each the robot is managed by a fleet management system (FMS) for distributing or scheduling logistic tasks (LT) among the at least one mobile logistics robot (MLR1, MLR2, MLR3) executing (exe) transport tasks (TT) of a transport task queue (TTQ) maintained (mta) by an automated logistics planning system (ALPS) for planning the logistic transport to which the mobile logistics robot (MLR1, MLR2, MLR3) and the fleet management system (FMS) are assigned, **characterized by:**
**a**) storing (sto) in a database (DB) of a data administration system (DAS) shop floor master data (SHFMD) of the shop floor (SHF), which are used to plan the production of the products and goods or the shop floor logistics and loadable into the automated logistics planning system (ALPS),
**b**) extracting (ext) from the sensor data-based measurements or captures shop floor related information (INF1_{SHF}, INF2_{SHF}, INF3_{SHF}) by the processing/control unit (PCU),
**c**) submitting (sbm) the shop floor related information (INF1_{SHF}, INF2_{SHF}, INF3_{SHF}) by each of the at least one mobile logistics robot (MLR1, MLR2, MLR3) to a data fusion facility (DFF) of the data administration system (DAS) for gathering the shop floor related information (INF1_{SHF}, INF2_{SHF}, INF3_{SHF}),
**d**) updating (upd) the stored shop floor master data (SHFMD) through the data fusion facility (DFF) having access to the database (DB) by merging (mrg) the stored shop floor master data (SHFMD) with the gathered shop floor related information (INF1_{SHF}, INF2_{SHF}, INF3_{SHF}) in a corresponding manner.

2. Method according to claim 1, **characterized in that** the shop floor related information (INF1_{SHF}, INF2_{SHF}, INF3_{SHF}) extracted (ext) from the robot measurements is at least one of data about utilization a space of the shop floor (SHF), data about persons that are present in different areas of the shop floor (SHF) and data about a location of assets of the shop floor (SHF).

3. Method according to claim 1 or 2, **characterized in that**
the shop floor related information (INF1_{SHF}, INF2_{SHF}, INF3_{SHF}) are submitted (sbm) to the data fusion facility (DFF), in particular continuously, either ("Option I") via a wireless connection from the at least one mobile logistics robot (MLR1, MLR2, MLR3) to the data fusion facility (DFF) including each a wireless interface (WIF) or ("Option II") via a wireless connection from the at least one mobile logistics robot (MLR1, MLR2, MLR3) to the fleet management system (FMS) including each a wireless interface (WIF), wherein for forwarding (fwd) the shop floor related information (INF1_{SHF}, INF2_{SHF}, INF3_{SHF}) the fleet management system (FMS) is connected with the data fusion facility (DFF).

4. Method according to one of the claims 1 to 3, **characterized in that**
in a case where the gathered shop floor related information (INF1_{SHF}, INF2_{SHF}, INF3_{SHF}) submitted from at least two mobile logistics robots (MLR1, MLR2; MLR1, MLR3; MLR2, MLR3) concern indeed a same state of the shop floor (SHF) but are different the data fusion facility (DFF) derives the most likely state by using probabilistic state estimation techniques such as a "Bayesian filter".

5. Method according to one of the claims 1 to 4, **characterized by**
- monitoring (mto) the shop floor master data (SHFD) through a data task scheduler (DTSD) assigned and having access to the database (DB) to identify a specific stored shop floor master data (SHFMD') of the stored shop floor master data (SHFMD) that requires an update, in particular if the identified specific data (SHFMD') has not been updated for a given time period, and
- maintaining (mtg) a data task queue (DTQ) through the data task scheduler (DTSD).

6. Method according to claim 5, **characterized in that** the data task queue (DTQ) is used (usx) by the fleet management system (FMS) such that
- the executed (exe) transport tasks (TT) of the transport task queue (TTQ) are prioritized with regard to whether the executed transport task (TT) also completes (cpl) a data task (DT) of the data task queue (DTQ) or
- if the at least one mobile logistics robot (MLR1, MLR2, MLR3) is not occupied with one logistic task (LT) distributed or scheduled by the fleet management system (FMS) the said mobile logistics robot (MLR) is scheduled instead only with a data task (DT) of the data task queue (DTQ).

7. Method according to one of the claims 1 to 6, **characterized in that**
the at least one mobile logistics robot (MLR1, MLR2, MLR3) is an "Automated Guided Vehicle <AGV>" or an autonomous forklift.

8. Method according to one of the claims 1 to 7, **characterized in that**
the sensor (SS) is a 2D- and/or 3D-camera, a 2D- and/or 3D-"Light Detection and Ranging <LIDAR>-sensor", a time-of-flight sensor, a stereo camera, a "Radio-Frequency IDentification <RFID>"-detector, a microphone for capturing noises from persons, engines and/or machine tools or any other volumetric sensor.

9. System arrangement (SAM) for optimizing production plannings of products and goods or shop floor logistics in producing, trading or distributing products and goods, with an automated logistics planning system (ALPS) as well as a fleet management system (FMS) and at least one mobile logistics robot (MLR1, MLR2, MLR3), which are both assigned to the automated logistics planning system (ALPS), wherein to automate a logistic transport of the products, the goods or production material for the products and goods within a shop floor (SHF) the at least one mobile logistics robot (MLR1, MLR2, MLR3) is equipped with a sensor technology (SST) including at least one sensor (SS) and a processing/control unit (PCU) appropriate to measure or capture and control a current state or changes of the shop floor (SHF) by sensor data (SSD1, SSD2, SSD3), when each the robot is managed by the fleet management system (FMS) for distributing or scheduling logistic tasks (LT) among the at least one mobile logistics robot (MLR1, MLR2, MLR3) executing (exe) transport tasks (TT) of a transport task queue (TTQ) maintained (mta) by the automated logistics planning system (ALPS) to plan the logistic transport,
**characterized by:**
**a**) a database (DB) of a data administration system (DAS), which is included in ("Option A") or assigned to ("Option B") the system arrangement (SAM), storing (sto) shop floor master data (SHFMD) of the shop floor (SHF), which are used to plan the production of the products and goods or the shop floor logistics and loadable into the automated logistics planning system (ALPS),
**b**) the processing/control unit (PCU) of each the at least one mobile logistics robot (MLR1, MLR2, MLR3) extracting (ext) from the sensor data-based measurements or captures shop floor related information (INF1_{SHF}, INF2_{SHF}, INF3_{SHF}),
**c**) a data fusion facility (DFF) of the data administration system (DAS) to which the shop floor related information (INF1_{SHF}, INF2_{SHF}, INF3_{SHF}) are submitted (sbm) by each of the at least one mobile logistics robot (MLR1, MLR2, MLR3) for gathering the shop floor related information (INF1_{SHF}, INF2_{SHF}, INF3_{SHF}),
**d**) the data fusion facility (DFF) having access to the database (DB) updating (upd) the stored shop floor master data (SHFMD) by merging (mrg) the stored shop floor master data (SHFMD) with the gathered shop floor related information (INF1_{SHF}, INF2_{SHF}, INF3_{SHF}) in a corresponding manner.

10. System arrangement (SAM) according to claim 9, **characterized in that**
the shop floor related information (INF1_{SHF}, INF2_{SHF}, INF3_{SHF}) extracted (ext) from the robot measurements is at least one of data about utilization a space of the shop floor (SHF), data about persons that are present in different areas of the shop floor (SHF) and data about a location of assets of the shop floor (SHF).

11. System arrangement (SAM) according to claim 9 or 10, **characterized by**
a wireless interface (WIF) of the mobile logistics robot (MLR1, MLR2, MLR3), the fleet management system (FMS) and the data fusion facility (DFF), in which the shop floor related information (INF1_{SHF}, INF2_{SHF}, INF3_{SHF}) are submitted (sbm) to the data fusion facility (DFF), in particular continuously, either ("Option I") via a wireless connection from the mobile logistics robot (MLR1, MLR2, MLR3) to the data fusion facility (DFF) or ("Option II") via a wireless connection from the mobile logistics robot (MLR1, MLR2, MLR3) to the fleet management system (FMS), which is connected with the data fusion facility (DFF) for forwarding (fwd) the shop floor related information (INF1_{SHF}, INF2_{SHF}, INF3_{SHF}).

12. System arrangement (SAM) according to one of the claims 9 to 11, **characterized in that**
the data fusion facility (DFF) derives in a case where the gathered shop floor related information (INF1_{SHF}, INF2_{SHF}, INF3_{SHF}) submitted from at least two mobile logistics robots (MLR1, MLR2; MLR1, MLR3; MLR2, MLR3) concern indeed a same state of the shop floor (SHF) but are different the most likely state by using probabilistic state estimation techniques such as a "Bayesian filter".

13. System arrangement (SAM) according to one of the claims 9 to 12, **characterized by**
a data task scheduler (DTSD) assigned and having access to the database (DB)
- monitoring (mto) the shop floor master data (SHFD) to identify a specific stored shop floor master data (SHFMD') of the stored shop floor master data (SHFMD) that requires an update, in particular if the identified specific data (SHFMD') has not been updated for a given time period, and
- maintaining (mtg) a data task queue (DTQ).

14. System arrangement (SAM) according to claim 13, **characterized in that**
the fleet management system (FMS) uses (usx) the data task queue (DTQ) such that
- the executed (exe) transport tasks (TT) of the transport task queue (TTQ) are prioritized with regard to whether the executed transport task (TT) also completes (cpl) a data task (DT) of the data task queue (DTQ) or
- if the at least one mobile logistics robot (MLR1, MLR2, MLR3) is not occupied with one logistic task (LT) distributed or scheduled by the fleet management system (FMS) the said at least one mobile logistics robot (MLR1, MLR2, MLR3) is scheduled instead only with a data task (DT) of the data task queue (DTQ).

15. System arrangement (SAM) according to one of the claims 9 to 14, **characterized in that**
the at least one mobile logistics robot (MLR1, MLR2, MLR3) is an "Automated Guided Vehicle <AGV>" or an autonomous forklift.

16. System arrangement (SAM) according to one of the claims 9 to 15, **characterized in that**
the sensor (SS) is a 2D- and/or 3D-camera, a 2D- and/or 3D-"Light Detection and Ranging <LIDAR>-sensor", a time-of-flight sensor, a stereo camera, a "Radio-Frequency IDentification <RFID>"-detector, a microphone for capturing noises from persons, engines and/or machine tools or any other volumetric sensor.
